# EUROPÄISCHE PATENTSCHRIFT

(11) **EP 1 346 164 B1**
(45) Veröffentlichungstag und Bekanntmachung des Hinweises auf die Patenterteilung: **26.05.2010**
(21) Anmeldenummer: 01995546.7
(22) Anmeldetag: 28.11.2001
(51) Int. Cl.: F16D 27/00

(54) **VORRICHTUNG ZUM BETÄTIGEN EINER KUPPLUNG**
DEVICE FOR OPERATING A CLUTCH
DISPOSITIF POUR ACTIONNER UN EMBRAYAGE

(30) Priorität: 20.12.2000 DE 10063440
(43) Veröffentlichungstag der Anmeldung: 24.09.2003
(73) Patentinhaber: ROBERT BOSCH GMBH, 70442 Stuttgart (DE)
(72) Erfinder: ASCHOFF, Joerg, 77815 Buehl (DE); MACK, Rolf, 76547 Sinzheim (DE); FORNOFF, Dieter, 76356 Weingarten (DE); DREWE, Ingo, 77815 Buehl (DE); MEYER, Christian, 76228 Karlsruhe-Wolfartsweier (DE)
(86) Internationale Anmeldenummer: PCT/DE2001/004473
(87) Internationale Veröffentlichungsnummer: WO 2002/050444

(56) Entgegenhaltungen:
- FR-A- 2 796 435
- US-A- 4 865 173
- US-A- 5 931 273

## Beschreibung

### Stand der Technik

Die Erfindung geht von einer Vorrichtung zum Betätigen einer Kupplung nach dem Oberbegriff des Anspruchs 1 aus.

Für Kraftfahrzeugantriebe mit einer Brennkraftmaschine und einem voll oder teilweise automatisch schaltbaren, mechanischen Schaltgetriebe werden Vorrichtungen zum Betätigen einer Kupplung verwendet, die einen elektronisch ansteuerbaren Kupplungssteller besitzen. Die Kupplung bzw. die Kupplungen können zum Anfahren des Fahrzeugs oder zum Schalten des Getriebes eingesetzt sein. Aus der US 5 441 462 ist ein solcher Kraftfahrzeugantrieb bekannt, bei dem eine elektronische Steuereinheit einen Kupplungssteller in Abhängigkeit von Betriebsparametern und Fahrparametern ansteuert.

Ferner ist aus der DE 197 01 739 Al ein Kupplungssteller zum Ein- und Ausrücken einer Fahrzeugkupplung mit einem Elektromotor bekannt, der über ein Untersetzungsgetriebe in Form eines Schneckengetriebes mit einer Antriebsschnecke und einem Schneckenrad einen axial verschiebbar geführten Stößel betätigt, der auf eine Gebereinheit einer hydraulischen Übertragungsstrecke zur Kupplung wirkt. Entsprechend den unterschiedlichen Anwendungsfällen sind Kupplungssteller mit unterschiedlichen Elektromotoren und Untersetzungsgetrieben zu entwickeln, zu fertigen und bereitzuhalten. Ferner ergeben lange Übertragungsstrecken zahlreiche Fehlerquellen und führen zu Ungenauigkeiten bezüglich der Stellbewegung.

Aus der WO 98/13614 Al ist ein Kupplungssteller bekannt, bei dem eine Motorwelle eines Elektromotors ein Gewinde trägt, auf dem ein Stellglied mit einem Innengewinde sitzt. Das Stellglied ist im Gehäuse des Kupplungsstellers in Umfangsrichtung fixiert, aber axial verschiebbar geführt, so dass es bei Drehung der Motorwelle seine axiale Position verändert. Das Stellglied wirkt über eine mechanische oder hydraulische Übertragungsstrecke in Form eines Hebelmechanismus bzw. eines hydrostatischen Systems auf das Ausrücklager einer Kupplung. Dabei wird der Elektromotor in Stellrichtung des Stellglieds von einer Speicherfeder unterstützt, die sich einerseits am Gehäuse abstützt und andererseits auf das Stellglied wirkt. Sowohl die in Achsrichtung wirkenden Komponenten der Stellkräfte als auch der Kräfte der Speicherfeder stützen sich über die Lagerung der Motorwelle ab, so dass die Lager verstärkt werden müssen und das Lagerspiel und die Toleranzen der Lagerbauteile die Stellgenauigkeit beeinflussen.

Die US 4,865,173 A offenbart eine Vorrichtung zur elektromotorischen Betätigung einer Kupplung, bei dem ein Stellglied das radial in ein Gewinde eines Rotors greift, axial verschoben wird.

Mit der FR-A-2796435, bzw. WO-01/03984 ist ein Axialantrieb zur Umformung einer Rotationsbewegung in eine Axialbewegung bekannt geworden. Dabei sind zwei Axialbauteile koaxial drehbar zueinander angeordnet, wobei Eingriffsmittel des einen Bauteils radial in eine Schraubenfeder oder Spiralfeder des anderen Bauteils eingreifen. Durch die relative Drehbewegung in Umfangsrichtung wird hierdurch eine Axialbewegung eines der beiden Bauteile erzeugt.

### Vorteile der Erfindung

Bei der erfindungsgemäßen Vorrichtung mit den Merkmalen des unabhängigen Anspruchs 1 ist das relativ zum Gehäuse axial verschiebbare Getriebeelement über eine Längsführung drehfest, aber axial verschiebbar mit einem Rotor bzw. einer Motorwelle des Elektromotors verbunden und wirkt über ein Stellglied auf das Ausrücklager. Dadurch stützen sich die Stellkräfte und gegebenenfalls Kräfte einer Speicherfeder über das im Gehäuse fixierte Getriebeelement direkt am Gehäuse ab. Die Motorlager werden durch diese Kräfte nicht belastet, da außer vernachlässigbaren Reibungskräften keine Kräfte in axialer Richtung über die Längsführung übertragen werden können. Ferner ist die Toleranzkette zwischen dem Ausrücklager der Kupplung und der Abstützung sehr gering, so dass Toleranzfehler in der Stellbewegung und Position des Kupplungsstellers sehr klein gehalten werden.
Bei einem Schraubengetriebe besitzt ein Getriebeelement ein Innengewinde, das in ein Außengewinde eines anderen Getriebeelements eingreift. Bei einem Schraubenbandgetriebe wird ein Getriebeelement von einem Schraubenband gebildet, während das andere Getriebeelement ein Übertragungselement ist, das mit radial gerichteten, über den Umfang verteilten Enden zwischen zwei benachbarte Windungen des Schraubenbands eingreift. Wenn der Elektromotor das mit ihm verbundene Getriebeelement antreibt, verdreht es sich relativ zu dem Getriebeelement, das drehfest im Gehäuse gehalten wird. Dabei wird das axial auf der Motorwelle beweglich gelagerte Getriebeelement durch das Gewinde in Achsrichtung verstellt. Diese Stellbewegung wird über ein Stellglied auf ein Ausrücklager der Kupplung übertragen. Ein solches Stellgetriebe baut sehr kompakt und kann bei einer großen Untersetzung sehr hohe Stellkräfte mit einer großen Positionsgenauigkeit erzeugen.

Der Elektromotor des Kupplungsstellers wirkt über ein hoch untersetzendes Stellgetriebe auf das Ausrücklager, so dass keine zusätzlichen Verstärker und Übertragungsstrecken wie z. B. eine Hydraulikstrecke oder ein hydraulischer Druckverstärker benötigt werden. Die in der Regel mit diesen Einrichtungen verbundenen Fehlerquellen werden bei der erfindungsgemäßen Vorrichtung vermieden, nämlich z. B. Gasansammlungen und Undichtigkeiten der Hydraulikstrecke, die zusammen mit einer Alterung der Hydraulikflüssigkeit alterungsbedingte Kraftverschiebungen zur Folge haben.

Als untersetzendes Stellgetriebe ist ein Spindelgetriebe oder Schraubengetriebe bekannter Bauart mit einer geringen Steigung des Gewindes oder ein Schraubenbandgetriebe vorteilhaft, bei dem die Gewindegänge des Gewindes durch ein Schraubenband gebildet werden. Von den über das Gewinde miteinander triebmäßig verbundenen Getriebeelementen ist jeweils eins im Gehäuse fixiert, während das andere vom Elektromotor angetriebene durch eine Längsführung drehfest, aber axial beweglich auf der Motorwelle gelagert ist.

Um die Reibung und den Verschleiß zwischen den Enden des Übertragungselements und dem Schraubenband zu verringern, sind die Enden zweckmäßigerweise mit Gleitsteinen oder Rollen versehen, die durch Gleitlager oder Wälzlager auf den Enden gelagert sind. Ferner sind zur guten Führung des Schraubenbands die Enden paarweise am Umfang angeordnet, wobei ein Zapfen eines Zapfenpaares zum anderen Zapfen sowohl in axialer Richtung als auch in Umfangsrichtung versetzt ist, so dass die Zapfen eines Zapfenpaares in Richtung der Steigerung des Schraubenbands liegen.

Der Kupplungssteller arbeitet in der Regel gegen die Kraft einer oder mehrerer Kupplungsfedern. Da das Stellgetriebe selbsthemmend ist, stützen sich Stellkräfte über die Getriebeelemente am Gehäuse ab, so dass der Elektromotor nur die Kräfte aufzubringen braucht, die zum Verstellen des Ausrücklagers erforderlich sind. Um diese Kräfte möglichst gering zu halten und möglichst auf die zum Überwinden der Reibkräfte erforderlichen zu reduzieren, wirkt eine Speicherfeder auf das axial verschiebbare Getriebeelement. Dadurch werden die Kräfte der Kupplungsfeder kompensiert. Da sich die Speicherfeder einerseits am Gehäuse und andererseits am axial beweglichen, rotierenden Getriebeelement abstützt, ist es vorteilhaft, zwischen der Speicherfeder und dem axial verschiebbaren Getriebelement ein axial wirkendes Wälzlager vorzusehen. Speicherfedern sind in der Technik wohl bekannt, und zwar sowohl in unterschiedlichen mechanischen als auch hydropneumatischen Ausführungen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teillängsschnitt durch einen Kupplungssteller,
- Fig. 2: eine Ansicht eines Übertragungselements
- Fig. 3: eine teilweise Abwicklung eines Schraubenbands mit einem Übertragungselement und
- Fig. 4-6: Varianten zu Fig. 1.

### Beschreibung der Ausführungsbeispiele

Eine Kupplung 10 besitzt ein Kupplungsgehäuse 12, in dem eine nicht näher dargestellte Kupplungsscheibe axial beweglich angeordnet ist und in üblicher Weise über eine Tellerfeder 14 beaufschlagt wird. Am inneren Rand der Tellerfeder 14 ist ein Ausrücklager 42 angeordnet, das von einem Kupplungssteller 16 über einen Hebel 50 axial verstellt wird.

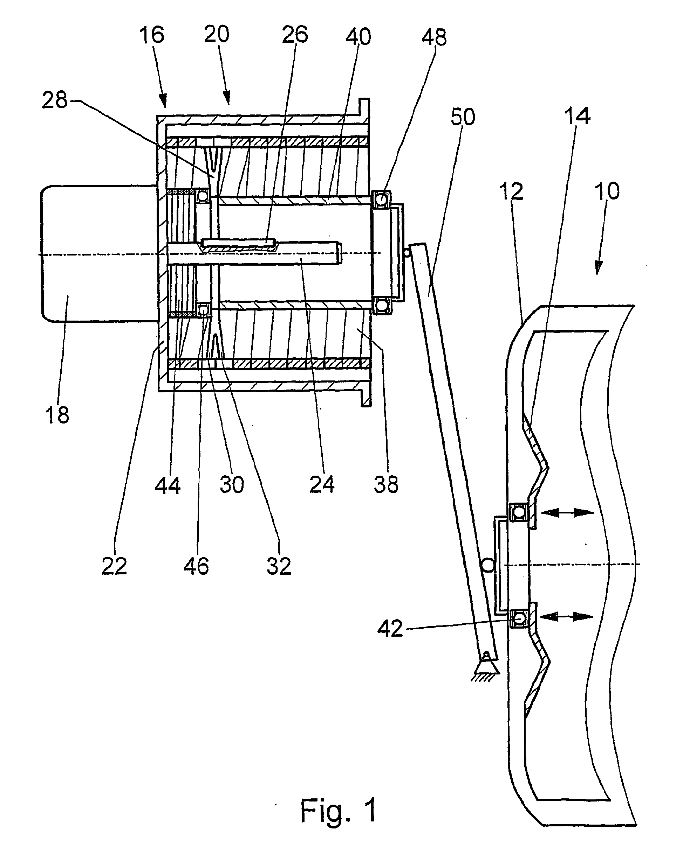

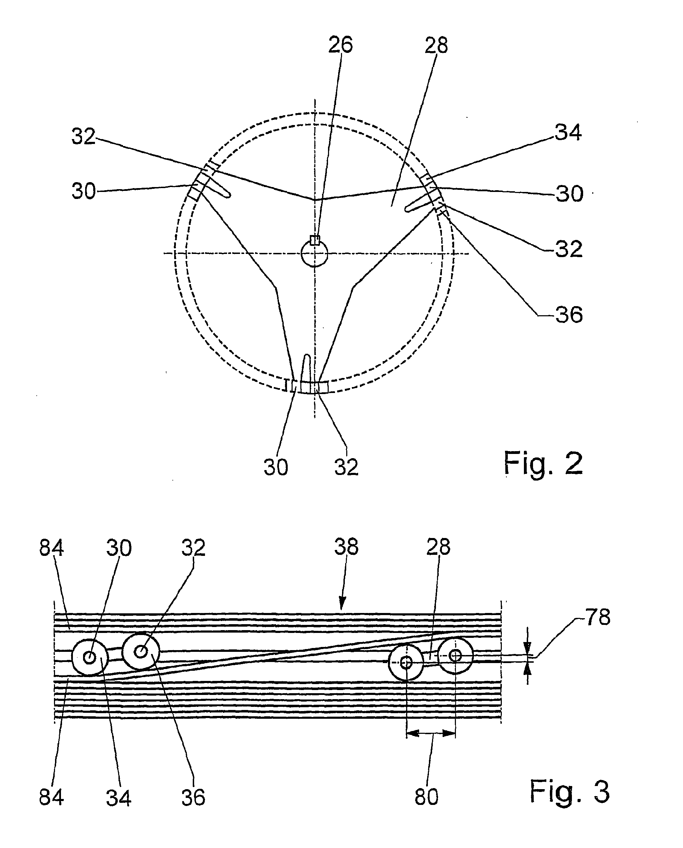

Der Kupplungssteller 16 nach Fig. 1 besitzt einen Elektromotor 18, der mit einem Stellgetriebe 20 verbunden ist, das als Schraubenbandgetriebe ausgebildet ist. In seinem Gehäuse 22 ist koaxial zur Rotationsachse ein Getriebeelement 38 in Form eines Schraubenbands axial und in Umfangsrichtung fixiert. Ein weiteres Getriebeelement 28 in Form eines Übertragungselements greift mit seinen Enden 30, 32, die paarweise über den Umfang verteilt sind (Fig. 2), zwischen jeweils benachbarte Windungen 84 (Fig. 3). Die Enden 30, 32 eines Paares weisen einen axialen Versatz 78 und in Umfangsrichtung einen Versatz 80 auf. Das Verhältnis zwischen dem axialen Versatz 78 und dem Versatz 80 in Umfangsrichtung ist so gewählt, dass die Enden 30, 32 eines Paares in Richtung der Steigung der Windung 84 zwischen zwei benachbarten Paaren liegen. Zur Verringerung der Reibung zwischen den Enden 30, 32 und dem Schraubenband 38 sind auf den Enden 30, 32 Rollen 34, 36 durch Gleitlager oder Wälzlager gelagert. Anstelle der Rollen 34, 36 können auch Gleitsteine vorgesehen werden, die - wie die Wälzlager - nicht näher dargestellt sind.

Das Übertragungselement 28 sitzt auf einer Motorwelle 24 des Elektromotors 18 und ist auf einer Längsführung 26 in Form einer Passfeder axial verschiebbar geführt. Die Längsführung 26, die auch als Mitnahmeverzahnung ausgebildet sein kann, dient gleichzeitig zum Übertragen des Drehmoments des Elektromotors 18 auf das Übertragungselement 28.

Bei einer Drehung des Übertragungselements 28 um die Rotationsachse folgen die Enden 30, 32 am Umfang des Übertragungselements 28 den Windungen 84 des Schraubenbands 38, wodurch das Übertragungselement 28 auf der Längsführung 26 in Achsrichtung verstellt wird. Das Übertragungselement 28 wirkt über ein zylindrisches Stellglied 40, ein Axiallager 48 und den Hebel 50 auf das Ausrücklager 42. Das Stellglied 40 wird durch die Tellerfeder 14 zwischen dem Übertragungselement 28 und dem Axiallager 48 spielfrei gehalten. Es kann aber auch an der Stirnseite, die dem Übertragungselement 28 zugewandt ist, mit dem Übertragungselement 28 verbunden sein.

Zur Kompensation der Kraft der Tellerfeder 14 der Kupplung 10 wird das Übertragungselement 28 auf der dem Stellglied 40 gegenüberliegenden Stirnseite über ein Axiallager 46 von einer Speicherfeder 44 belastet, die sich mit ihrem anderen Ende am Gehäuse 22 abstützt. Sowohl die Kompensationskraft als auch die Stellkräfte sowie deren Reaktionkräfte stützen sich unmittelbar über die Getriebeelemente 28 und 38 des selbsthemmenden Stellgetriebes 20 am Gehäuse 22 ab und belasten nicht die Motorlager.

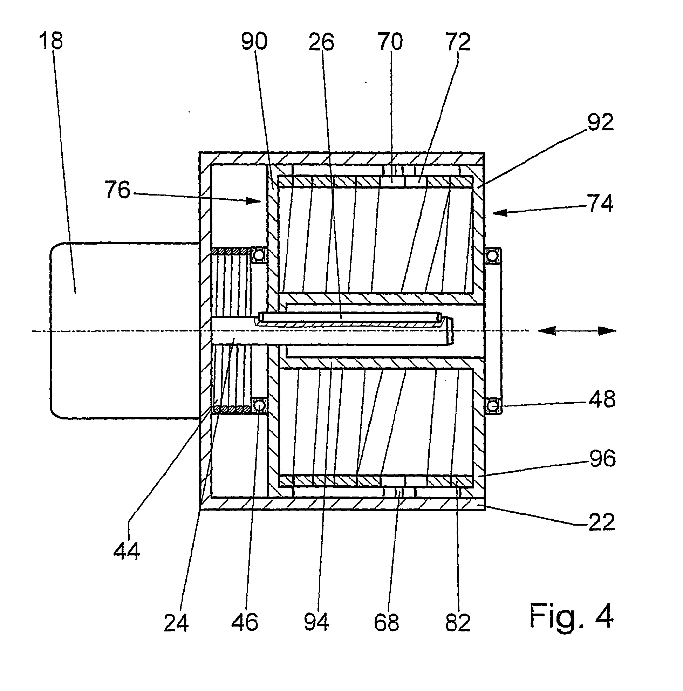

Bei der Ausführung nach Fig. 4 ist ein Übertragungselement 68 fest mit dem Gehäuse 22 verbunden und greift mit Rollen 70, 72 zwischen die Windungen des Schraubenbands 82, während das Schraubenband 82 zwischen einem Stellglied 74 und einem Stützelement 76 gehalten ist, wobei das Stellglied 74 und das Stützelement 76 auf der Längsführung 26 axial verschiebbar angeordnet sind. Das Stellglied 74 besitzt einen quer zur Rotationsachse verlaufenden Wandteil 92, an dem das Axiallager 48 anliegt. In der Regel ist die Anlagefläche zwischen dem Wandteil 92 und dem Axiallager 48 ringförmig. Es reicht allerdings aus, wenn das Stellglied 74 mit mindestens drei auf den Umfang verteilten Anlageflächen am Axiallager 48 anliegt.

Am inneren Rand des Wandteils 92 des Stellglieds 74 schließt sich ein zylindrischer Wandteil 94 an, der innerhalb des Schraubenbands 82 verläuft und sich an einem quer zur Rotationsachse verlaufenden Wandteil 90 des Stützelements 76 abstützt bzw. mit diesem verbunden ist. Zweckmäßigerweise sind das Stellglied 74 und das Stützelement 76 am äußeren Umfang im Gehäuse 22 zentriert. Wird das Stellglied 74 und das Stützelement 76 vom Elektromotor 18 angetrieben, verschiebt sich das Schraubenband 82 in Achsrichtung relativ zum gehäusefesten Übertragungselement 68, wodurch das Stellglied 74 und das Stützelement 76 in gleicher Weise bewegt werden und auf das Axiallager 48 wirken. Auch bei dieser Ausführung wird das Stützelement 76 durch die Speicherfeder 44 über das Axiallager 46 belastet.

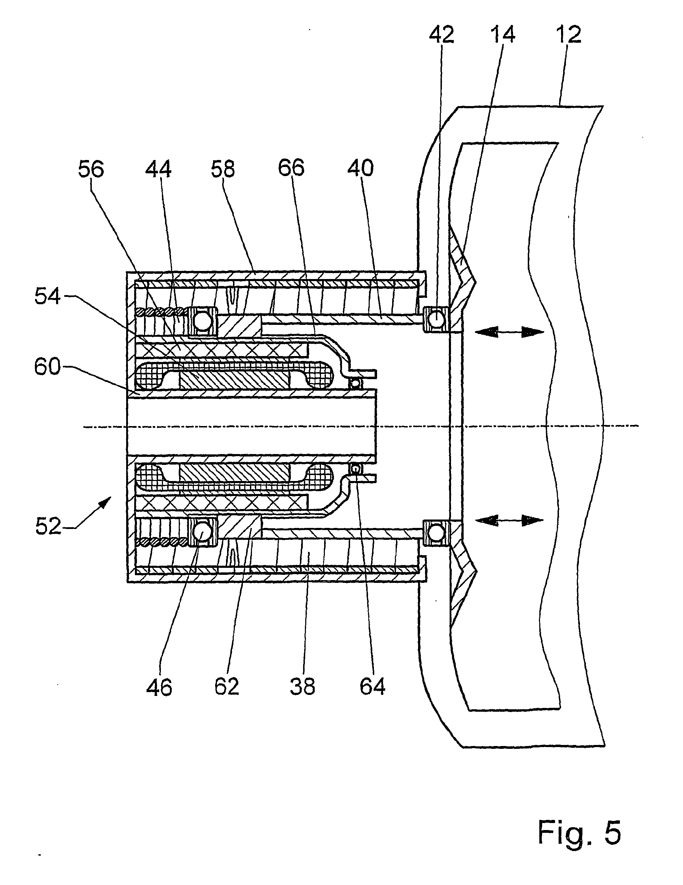

Bei der Ausführung nach Fig. 5 ist der Elektromotor 52 in einem Gehäuse 58 des Stellgetriebes 20 integriert. Dies ergibt einen sehr kurz bauenden, kompakten Kupplungssteller 16, der zweckmäßigerweise koaxial zum Ausrücklager 42 angeordnet und am Kupplungsgehäuse 12 angeflanscht ist. Somit ergibt sich ein kurzer Kraftschluss über das Stellglied 40, die Getriebeelemente 62, 38, das Gehäuse 58 und das Kupplungsgehäuse 12. Der Elektromotor 52 nutzt geschickt den Innenraum des Schraubenbands 38. Sein Stator 54 ist auf einem Lagerstutzen 60 des Gehäuses 58 angeordnet. Er wird von einem Rotor 56 umgeben, der mittels Lager 64 auf dem Lagerstutzen 60 drehbar gelagert ist.

Der Rotor 56 besitzt am Umfang eine Längsführung 66, in die ein Übertragungselement 62 eingreift. Das Übertragungselement 62 ist am Umfang gleich gestaltet wie das Übertragungselement 28 nach Fig. 1, Fig. 2 und Fig. 3, so dass es sich bei Rotation des Rotors 56 um die Rotationsachse 48 in Achsrichtung bewegt und dabei über das Stellglied 40 das Ausrücklager 42 verstellt. Schließlich wirkt die Speicherfeder 44 über das Axiallager 46 auf das Übertragungselement 62, so dass auch hierbei die Kraft der Tellerfeder 14 kompensiert ist.

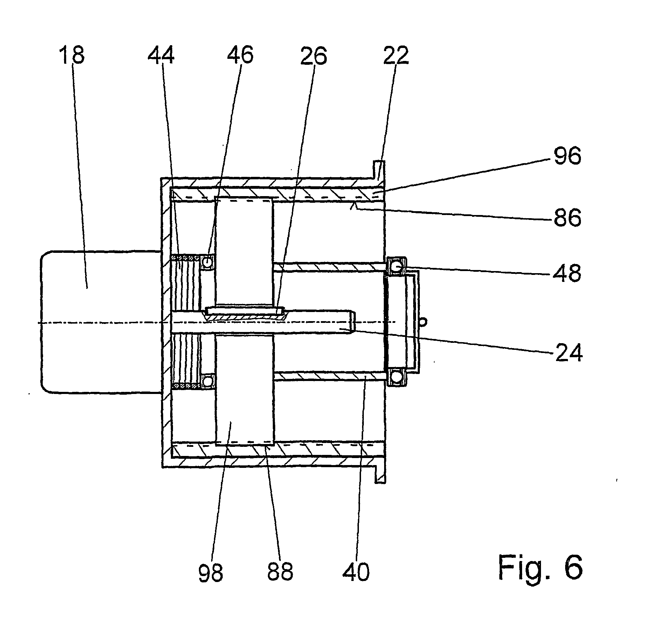

Die Ausführung nach Fig. 6 besitzt als Stellgetriebe 20 anstelle eines Schraubenbandgetriebes ein Schraubengetriebe, bei dem ein Getriebeelement 96 in Form einer Gewindehülse mit einem Innengewinde 86 in das Gehäuse 22 fest eingesetzt ist. Das Getriebelement 96 kann auch integraler Bestandteil des Gehäuses 22 sein. Ein weiteres Getriebeelement 98 greift mit seinem Außengewinde 88 in das Innengewinde des Getriebeelements 96 ein. Das Getriebeelement 98 wird über die Längsführung 26 von der Motorwelle 24 angetrieben und ist auf der Motorwelle 24 in Achsrichtung verschiebbar geführt. Bei Rotation der Motorwelle 24 wird das Getriebeelement 98 entsprechend der Steigung des Innengewindes 86 und des Außengewindes 88 axial verschoben und wirkt über das Stellglied auf das axiale Lager 48. Das Innengewinde 86 und das Außengewinde 88 werden zweckmäßigerweise als metrische Feingewinde ausgebildet. Auch bei dieser Ausführung wirkt auf das im Gehäuse 22 axial verschiebbare Getriebeelement 98 die Speicherfeder 44 über das Axiallager 46.

## Patentansprüche

1. Vorrichtung zum Betätigen einer Kupplung (10), insbesondere für Kraftfahrzeugantriebe, mit einem elektronisch ansteuerbaren Kupplungssteller (16), der einen Elektromotor (18,52) und ein untersetzendes Stellgetriebe (20) mit zwei koaxial zueinander angeordneten Getriebeelementen (28,38, 62 bzw. 68,82 bzw. 96,98) umfasst, die über ein Gewinde (84,86,88) triebmäßig miteinander verbunden sind und sich bei einer relativen Drehung zueinander axial zueinander verstellen, wobei eines der Getriebeelemente (38,68,96) in einem Gehäuse (22,58) des Kupplungsstellers (16) axial fixiert ist und die Stellbewegung des anderen Getriebeelements (28,62,82,98) auf ein Ausrücklager (42) einer Kupplungsscheibe übertragen wird, wobei das relativ zum Gehäuse (22, 58) axial verschiebbare Getriebeelement (28,62,82,98) über eine Längsführung (26,66) drehfest, aber axial verschiebbar mit einem Rotor (56) bzw. einer Motorwelle (24) des Elektromotors (18) verbunden ist und über ein Stellglied (40, 74) auf das Ausrücklager (42) wirkt,
**dadurch gekennzeichnet, dass** das Stellgetriebe (20) ein Schraubenbandgetriebe ist, bei dem ein Getriebeelement (28, 62, 68) von einem Übertragungselement mit radial gerichteten, über den Umfang verteilten Enden (30, 32) gebildet wird, das zwischen zwei benachbarte Windungen (84) eines Schraubenbands (38, 82) eingreift, das ein weiteres Getriebeelement bildet, wobei die Motorwelle (24) als Längsführung (26) eine Passfeder oder Mitnahmeverzahnung aufweist, die gleichzeitig als Drehmitnahme dienen.

2. Vorrichtung nach Anspruch 1, **dadurch gekennzeichnet, dass** ein Getriebeelement (96) eine Hülse ist, die in das Gehäuse (22) fest eingesetzt oder mit diesem einstückig ausgebildet ist und ein Innengewinde (86) aufweist, das in ein Außengewinde (88) des anderen Getriebeelements (98) eingreift, das in einer Längsführung (26, 66) des Rotors bzw. der Motorwelle (24) geführt ist.

3. Vorrichtung nach Anspruch 2, **dadurch gekennzeichnet, dass** das Innengewinde (86) und das Außengewinde (88) als metrisches Feingewinde

4. Vorrichtung nach Anspruch 1, **dadurch gekennzeichnet, dass** die Enden (30, 32) Gleitsteine oder durch Gleitlager oder Wälzlager gelagerte Rollen (34, 36) aufweisen.

5. Vorrichtung nach einem der Ansprüche 1 oder 4, **dadurch gekennzeichnet, dass** die Enden (30, 32) paarweise am Umfang angeordnet sind, wobei ein Zapfen (30) eines Zapfenpaars (30, 32) zum anderen Zapfen (32) in axialer Richtung einen Versatz (78) und in Umfangsrichtung einen Versatz (80) aufweist und das Verhältnis des Versatzes (78) zum Versatz (80) der Steigung des Schraubenbands (38) zwischen den Zapfenpaaren (30, 32) entspricht.

6. Vorrichtung nach einem der Ansprüche 1 bis 5, **dadurch gekennzeichnet, dass** das Übertragungselement (68) im Gehäuse (22) fixiert ist, dass das Schraubenband (82) axial zwischen dem Stellglied (74) und einem Stützelement (76) angeordnet ist und zusammen mit diesen über die Längsführung (26, 66) axial geführt und von der Motorwelle (24) bzw. dem Rotor (56) gedreht wird.

7. Vorrichtung nach Anspruch 6, **dadurch gekennzeichnet, dass** das Stützglied (76) und das Stellglied (74) am äußeren Umfang im Gehäuse (22) drehbar und axial verschiebbar gelagert sind.

8. Vorrichtung nach Anspruch 6 oder 7, **dadurch gekennzeichnet, dass** das Stützglied (76) und das Stellglied (74) quer zu einer Rotationsachse (48) der Motorwelle (24) verlaufende Wandteile besitzt, die durch einen zylindrischen Wandteil innerhalb des Schraubenbands (82) verbunden sind.

9. Vorrichtung nach einem der vorhergehenden Ansprüche, **dadurch gekennzeichnet, dass** mindestens eine Speicherfeder (44) auf das relativ zum Gehäuse verschiebbare Getriebeelement wirkt.

10. Vorrichtung nach Anspruch 9, **dadurch gekennzeichnet, dass** zwischen der Speicherfeder (44) und dem Getriebeelement (28, 62 82) ein axial wirkendes Wälzlager (46) angeordnet ist.

11. Vorrichtung nach einem der vorhergehenden Ansprüche, **dadurch gekennzeichnet, dass** der Elektromotor (52) im Gehäuse (58) des Stellgetriebes (20) integriert ist.

12. Vorrichtung nach Anspruch 11, **dadurch gekennzeichnet, dass** das Schraubenband (38) den Elektromotor (52) umgibt.

13. Vorrichtung nach Anspruch 11 oder 12, **dadurch gekennzeichnet, dass** der Elektromotor (52) einen innen liegenden Stator (54) und einen außen liegenden Rotor (56) besitzt, der am Umfang eine axiale Führung (66) für das angetriebene Getriebeelement (68, 82) aufweist.

14. Vorrichtung nach einem der Ansprüche 11 bis 13, **dadurch gekennzeichnet, dass** das Gehäuse (22) des Kupplungsstellers (16) koaxial am Kupplungsgehäuse (12) angeflanscht ist und das Stellglied (40) unmittelbar auf das Ausrücklager (42) wirkt.

## Claims

1. Device for actuating a clutch (10), in particular for motor vehicle drives, having an electronically operable clutch actuator (16) which comprises an electric motor (18,52) and a reduction actuating gearing (20) with two gearing elements (28, 38, 62 and 68, 82 and 96, 98) which are arranged coaxially with respect to one another and which are drive-connected to one another by means of a thread (84, 86, 88) and are adjusted axially with respect to one another in the event of a relative rotation with respect to one another, with one of the gearing elements (36,68,96) being axially fixed in a housing (22,58) of the clutch actuator (16) and with the actuating movement of the other gearing element (28,62,82,98) being transmitted to a release bearing (42) of a clutch disc, with the gearing element (28,62,82,98) which is axially movable relative to the housing (22,58) being rotationally fixedly but axially movably connected by means of a longitudinal guide (26,66) to a rotor (56) or to a motor shaft (24) of the electric motor (18) and acting via an actuating member (40,74) on the release bearing (42),
**characterized in that** the actuating gearing (20) is a helical band gearing in which one gearing element (28, 62, 68) is formed by a transmission element with radially aligned ends (30, 32) distributed over the circumference, which transmission element engages between two adjacent windings (84) of a helical band (38, 82) which forms a further gearing element, with the motor shaft (24) having, as a longitudinal guide (26), a parallel key or driving toothing which simultaneously serve as a rotational driving facility.

2. Device according to Claim 1, **characterized in that** one gearing element (96) is a sleeve which is fixedly inserted into or formed in one piece with the housing (22) and has an internal thread (86) which engages into an external thread (88) of the other gearing element (98) which is guided in a longitudinal guide (26, 66) of the rotor or of the motor shaft (24).

3. Device according to Claim 2, **characterized in that** the internal thread (86) and the external thread (88) are formed as metric fine threads.

4. Device according to Claim 1, **characterized in that** the ends (30, 32) have sliding blocks or rollers (34, 36) mounted by means of plain bearings or rolling bearings.

5. Device according to one of Claims 1 or 4, **characterized in that** the ends (30, 32) are arranged in a paired fashion on the circumference, with a journal (30) of a journal pair (30, 32) having an offset (78) in the axial direction and an offset (80) in the circumferential direction in relation to the other journal (32), and the ratio of the offset (78) to the offset (80) corresponds to the pitch of the helical band (38) between the journal pairs (30, 32).

6. Device according to one of Claims 1 to 5, **characterized in that** the transmission element (68) is fixed in the housing (22), **in that** the helical band (82) is arranged axially between the actuating member (74) and a support element (76) and, together with these, is guided axially by means of the longitudinal guide (26, 66) and is rotated by the motor shaft (24) or the rotor (56).

7. Device according to Claim 6, **characterized in that** the support element (76) and the actuating member (74) are mounted in a rotatable and axially movable manner on the outer circumference in the housing (22).

8. Device according to Claim 6 or 7, **characterized in that** the support element (76) and the actuating member (74) have wall parts running transversely with respect to a rotational axis (48) of the motor shaft (24), which wall parts are connected by means of a cylindrical wall part within the helical band (82).

9. Device according to one of the preceding claims, **characterized in that** at least one accumulator spring (44) acts on the gearing element which is movable relative to the housing.

10. Device according to Claim 9, **characterized in that** an axially acting rolling bearing (46) is arranged between the accumulator spring (44) and the gearing element (28, 62, 82).

11. Device according to one of the preceding claims, **characterized in that** the electric motor (52) is integrated in the housing (58) of the actuating gearing (20).

12. Device according to Claim 11, **characterized in that** the helical band (38) surrounds the electric motor (52).

13. Device according to Claim 11 or 12, **characterized in that** the electric motor (52) has an inner stator (54) and an outer rotor (56) which has, on the circumference, an axial guide (66) for the driven gearing element (68, 82).

14. Device according to one of Claims 11 to 13, **characterized in that** the housing (22) of the clutch actuator (16) is flange-mounted coaxially on the clutch housing (12), and the actuating member (40) acts directly on the release bearing (42).

## Revendications

1. Dispositif pour actionner un embrayage (10), notamment pour des entraînements de véhicules automobiles, comprenant un dispositif de réglage d'embrayage (16) à commande électronique, qui comprend un moteur électrique (18, 52) et un engrenage de réglage (20) démultiplicateur, avec deux éléments d'engrenage disposés coaxialement l'un à l'autre (28, 38, 62, respectivement 68, 82, respectivement 96, 98), qui sont connectés l'un à l'autre par entraînement par le biais d'un filetage (84, 86, 88), et qui se déplacent axialement l'un par rapport à l'autre lors d'une rotation relative l'un par rapport à l'autre, l'un des éléments d'engrenage (38, 68, 96) étant fixé axialement dans un boîtier (22, 58) du dispositif de réglage d'embrayage (16) et le mouvement de réglage de l'autre élément d'engrenage (28, 62, 82, 98) étant transmis à un palier de débrayage (42) d'un disque d'embrayage, l'élément d'engrenage (28, 62, 82, 98) déplaçable axialement par rapport au boîtier (22, 58) étant connecté par le biais d'un guide longitudinal (26, 66) de manière solidaire en rotation mais déplaçable axialement à un rotor (56) ou un arbre de moteur (24) du moteur électrique (18) et agissant par le biais d'un actionneur (40, 74) sur le palier de débrayage (42),
**caractérisé en ce que** l'engrenage de réglage (20) est un engrenage à bande à vis dans lequel un élément d'engrenage (28, 62, 68) est formé par un élément de transmission avec des extrémités (30, 32) orientées radialement et réparties sur la périphérie, qui vient en prise entre deux spires adjacentes (84) d'une bande à vis (38, 82) qui forme un autre élément d'engrenage, l'arbre de moteur (24) présentant, en tant que guide longitudinal (26), un ressort d'ajustement ou une denture d'entraînement, qui servent en même temps d'entraînement en rotation.

2. Dispositif selon la revendication 1, **caractérisé en ce qu'**un élément d'engrenage (96) est une douille, qui est insérée fixement dans le boîtier (22) ou qui est réalisée d'une seule pièce avec celui-ci et qui présente un filetage interne (86), qui vient en prise dans un filetage externe (88) de l'autre élément d'engrenage (98) qui est guidé dans un guide longitudinal (26, 66) du rotor ou de l'arbre de moteur (24).

3. Dispositif selon la revendication 2, **caractérisé en ce que** le filetage interne (86) et le filetage externe (88) sont réalisés sous forme de filetage fin métrique.

4. Dispositif selon la revendication 1, **caractérisé en ce que** les extrémités (30, 32) présentent des coulisseaux ou des rouleaux (34, 36) supportés par des paliers lisses ou des paliers à roulements.

5. Dispositif selon l'une quelconque des revendications 1 ou 4, **caractérisé en ce que** les extrémités (30, 32) sont disposées par paire sur la périphérie, un tourillon (30) d'une paire de tourillons (30, 32) présentant, par rapport à l'autre tourillon (32), dans la direction axiale, un décalage (78) et dans la direction périphérique un décalage (80), et le rapport du décalage (78) au décalage (80) correspondant au pas de la bande à vis (38) entre les paires de tourillons (30, 32).

6. Dispositif selon l'une quelconque des revendications 1 à 5, **caractérisé en ce que** l'élément de transfert (68) est fixé dans le boîtier (22), **en ce que** la bande à vis (82) est disposée axialement entre l'actionneur (74) et un élément de support (76) et est guidée axialement conjointement avec ceux-ci par le biais du guide longitudinal (26, 66) et est tournée par l'arbre de moteur (24) ou le rotor (56).

7. Dispositif selon la revendication 6, **caractérisé en ce que** l'organe de support (76) et l'actionneur (74) sont montés de manière rotative et déplaçable axialement sur la périphérie extérieure dans le boîtier (22).

8. Dispositif selon la revendication 6 ou 7, **caractérisé en ce que** l'organe de support (76) et l'actionneur (74) possèdent des parties de paroi s'étendant transversalement à un axe de rotation (48) de l'arbre de moteur (24), qui sont connectées par une partie de paroi cylindrique à l'intérieur de la bande à vis (82).

9. Dispositif selon l'une quelconque des revendications précédentes, **caractérisé en ce qu'**au moins un ressort d'accumulation (44) agit sur l'élément d'engrenage déplaçable par rapport au boîtier.

10. Dispositif selon la revendication 9, **caractérisé en ce qu'**entre le ressort d'accumulation (44) et l'élément d'engrenage (28, 62, 82) est disposé un palier à roulement (46) agissant axialement.

11. Dispositif selon l'une quelconque des revendications précédentes, **caractérisé en ce que** le moteur électrique (52) est intégré dans le boîtier (58) de l'engrenage de réglage (20).

12. Dispositif selon la revendication 11, **caractérisé en ce que** la bande à vis (38) entoure le moteur électrique (52).

13. Dispositif selon la revendication 11 ou 12, **caractérisé en ce que** le moteur électrique (52) possède un stator (54) situé à l'intérieur et un rotor (56) situé à l'extérieur, qui présente sur la périphérie un guide axial (66) pour l'élément d'engrenage entraîné (68, 82).

14. Dispositif selon l'une quelconque des revendications 11 à 13, **caractérisé en ce que** le boîtier (22) du dispositif de réglage d'embrayage (16) est bridé coaxialement au boîtier d'embrayage (12) et l'actionneur (40) agit directement sur le palier de débrayage (42).
